# EUROPEAN PATENT APPLICATION

(11) **EP 4 725 907 A1**
(43) Date of publication of application: **15.04.2026**
(21) Application number: 24819670.1
(22) Date of filing: 31.05.2024
(51) Int. Cl.: C01F 7/02, C01F 7/066, C01F 7/142

(54) **METHOD FOR TREATING TAILINGS POND LIQUOR**

(30) Priority: 06.06.2023 RU 2023114813
(71) Applicant: Obshchestvo S Ogranichennoy Otvetstvennost'yu "Obedinennaya Kompaniya Rusal Inzhenerno- Tekhnologicheskiy Tsentr", G. Krasnoyarsk 660111 (RU)
(72) Inventor: KNYAZEV, Andrej Vladimirovich, G. Krasnoyarsk, 660111 (RU); DAMASKIN, Aleksandr Aleksandrovich, G. Krasnoyarsk, 660111 (RU); DAMASKINA, Anna Aleksandrovna, G. Krasnoyarsk, 660111 (RU); ORDON, Sergej Fedorovich, G. Krasnoyarsk, 660111 (RU)
(74) Representative: Atalay, Baris
(86) International application number: PCT/RU2024/050116
(87) International publication number: WO 2024/253563

(57) **Abstract**

A method for processing of mud water resulting from alumina production includes filtering mud water, carbonating the water by saturation with carbon dioxide, separating the precipitates formed, washing same with water, and drying. The mud water is carbonated in two stages. The first stage is carried out to a slurry pH value at which a precipitate in the form of amorphous aluminium hydroxide is produced. The carbonated solution is then sent to a second stage of carbonation to a slurry pH value at which pseudoboehmite is precipitated. The result is that of producing powders of aluminium hydroxide with a pseudoboehmite structure and a low level of impurities, which can be used in the production of cement mortar mixes and aluminium oxide catalyst supports.

## Description

### Technical area

The invention refers to chemical engineering, in particular to a method for production of amorphous aluminium hydroxide and pseudoboehmite-structured aluminium hydroxide, as well as it can be also used for production of pelletised active aluminium oxide, catalysts, carrying agents, and in other industries.

### Technical level

Mud water participating in many production processes takes a significant part in water circulation of alumina production facilities. Aluminium oxide content in mud water allows using it as a raw material source for production of various products based on aluminium hydroxide including amorphous aluminium hydroxide applied as an active additive to mortars and pseudoboehmite-structured aluminium hydroxide applied as an initial raw material for production of pelletised active aluminium oxide, catalysts, and carrying agents.

Aluminium hydroxides applied as raw materials for catalyst carriers should meet the following specific requirements.

Firstly, pseudoboehmite should not contain impurity phases of bayerite, gibbsite, or X-ray amorphous aluminium trihydroxide in quantities more than 1-2% wt each.

Secondly, contents of some impurities are strictly regulated, since they are catalytic poisons for most industrial catalytic processes. Particularly distinguished elements among controlled impurities include iron, sodium, and other alkaline/alkaline-earth metals.

Metallic aluminium or aluminium hydroxide is generally used as a raw material for production of pseudoboehmite. The most commonly used method for production of pseudoboehmite is reprecipitation of crystalline aluminium hydroxide via mixing of alkaline and acidic solutions either or both containing aluminium.

For example, there is a method for production of pseudoboehmite under patent #US 4154812(A) published on May 15th, 1979 via mixing of aluminate liquor and aluminium sulphate liquor. This method includes soaking of slurry at 60-82°C to final pH from 9.5 to 10.5, separation of residue via filtration, washing, and drying with production of pseudoboehmite, sodium sulphate liquor and wash water from washing of residue.

According to patent #CN102219245 (B) published on June 5th, 2013, pseudoboehmite is produced via neutralising precipitation in sodium aluminate liquor and aluminium sulphate liquor, soaking, filtration, washing, and drying, where concentration of solution in oxide equivalent is from 180 to 320 g Al₂O₃ g/l, alkaline ratio is from 1.3 to 2.5, and solution ultraviolet (UV) spectrum absorption in 270 nm position based on UV spectrum response is from 0.8 to 5.5. As compared to prior knowledge, pseudoboehmite can be directly used for production of aluminium oxide with a large pore volume, such as gamma aluminium oxide with a pore volume from 1.1 to 1.5 ml/g.

Disadvantages of the known processes are complicated separation of phases during filtration and generation of liquid wastes difficult to be recycled due to low concentrations. Evaporation of such solutions is associated with high energy consumption incomparable with effects from sales of produced salts. As a result, these wastes cause pollution of water basins negatively affecting the environmental situation. In addition, acid ions cannot be completely removed from residue by washing, which negatively affects quality of produced pseudoboehmite.

According to patent #RU 2234460 C1 published on August 20th, 2004, pseudoboehmite-structured aluminium hydroxide is produced via heat treatment of initial aluminium trihydroxide on a rotating surface heated to 100-700°C for 0.5-5 s followed by hydrothermal treatment of the product at temperature of 105-170°C for 2-48 h in presence of inorganic or organic matter.

A disadvantage of this method is that a mix of various phases from aluminium trihydrate and monohydrate to oxides can be formed during thermochemical activation of gibbsite depending on its conditions. As a result of this, further hydrothermal treatment cannot ensure monophasity of the product, which then negatively affects specific surface area and strength of catalyst.

There are some methods for production of pseudoboehmite-structured aluminium hydroxide based on carbonisation of aluminate liquors by gas-air mixtures with various CO₂ contents.

There is also a known method for production of pseudoboehmite including preparation of aluminium hydroxide with the Bayer method, dissolution of this hydroxide in caustic to produce aluminate liquor with concentration of 20-200 g/l Al₂O₃, carbonisation of aluminate liquor at temperature of 0-60°C to final pH of 7-11.5 with precipitation of X-ray amorphous residue, separation of residue, its washing by water solution at temperature about 30°C, and treatment of residue by mineral acid solution (patent #EP 85592 published on July 2nd, 1986).

Disadvantages of the method are application of Al(OH)₃ as feedstock for preparation of aluminate liquor, higher production cash cost, consequently complicated process control, and need for waste recycling.

There is a known method for processing of aluminium-containing raw materials (patent #RU 2197429 published on January 27th, 2003) including the following stages:
- Sintering with limestone and an alkali-containing material to produce gas products and sinter;
- Digestion of sinter to produce aluminate liquor, desilication of aluminate liquor;
- Dilution of desilicated liquor by carbonate liquor to achieve molar ratio of carbonate alkali to total alkali at 0.15-0.6;
- Carbonisation of diluted liquor by gas products from sintering at temperature of 10-50°C and consumption of CO₂/Al₂O₃ = 1-5 dm³/g;
- Separation of residue from carbonate liquor formed during carbonisation;
- Washing of residue to produce pseudoboehmite and wash water with separation from carbonate liquor and wash water of alkaline metal carbonates.

The major problem of this known method consists in that desilicated aluminate liquor of alumina production is used as a raw material, while this liquor is the main raw material source for alumina production. Upon arrangement of production using this method, the need for application of aluminate liquor results in lower productive capacity of alumina production or higher expenses for production of additional aluminate liquor quantity.

The closest method to the claimed technical solution (prototype) is that for removal of impurities from mud water and production of pseudoboehmite according to patent #CN 107973327 (A) published on May 1st, 2018 comprises the following stages:
1. Treatment of mud water by lime milk at 80-90°C with molar ratio of CaO/SiO₃²⁻ = 1.1-1.3:1 and further filtration.
2. Treatment of filtrate produced at stage 1 using flocculant at 70-80°C and further filtration. Polyacrylamide is used as flocculant.
3. Addition of BaAl₂O₄ to filtrate produced at stage 2 and further filtration of residue.
4. Treatment of H₂C₂O₄ filtrate at 40-50°C for removal of excessive Ca²⁺ and Ba²⁺.
5. Carbonisation of purified NaAlO₂ solution by carbon dioxide with concentration of 90-99% at temperature of 85-90°C for 2-3 min, washing of produced residue by deionised water, grinding, and drying.

Disadvantages of the method are application of multistage mud water treatment with plenty of expensive reagents, need for an independent carbon dioxide source, for example, gas cylinders, and incapability to recycle solutions after filtration and residue washing.

### Invention disclosure

The technical problem and technical result of the claimed method are to develop a low-cost method for processing of mud water from alumina production to produce pseudoboehmite-structured aluminium hydroxide powders with low impurity contents from this water and thereby expand the raw material market for production of cement mortars and aluminium oxide catalyst carriers.

The problem is solved and the result is achieved with the offered method for processing of mud water from alumina production, which includes: filtration of mud water, its carbonisation via bubbling by carbon dioxide-containing gases, separation of formed residues, their washing by water, and drying. Furthermore, according to the claimed invention, mud water is carbonised in two stages, where: the first stage of mud water carbonisation is carried out up to a pH value of slurry preferably equal to 11-10.5, resulting slurry is filtered to get residue, and this residue is washed to get a product in form of amorphous aluminium hydroxide suitable for application as a modifier of cement mortars and carbonate liquor sent to the second stage of carbonisation; the second stage of carbonisation is carried out up to a pH value of slurry preferably equal to 9-8, resulting slurry is filtered, and residue is washed at wash water temperature of 40-90°C to get a product in form of pseudoboehmite suitable for application as a precursor in production of aluminium oxide catalyst carriers.

The claimed method is supplemented by attributes characterising the invention in particular cases of embodiment.

Exhaust gases from sintering kilns of aluminium-containing raw materials with limestone and/or soda can be used as carbon dioxide-containing gases.

Gases from lime calcination kilns or gases formed upon combustion of power generating coal or hydrocarbons also can be used as carbon dioxide-containing gases.

Upon completion of carbonisation at slurry pH of 11-10.5, residue is represented by amorphous aluminium hydroxide. Upon completion of carbonisation at slurry pH of 9-8, residue is represented by pseudoboehmite phase.

In order to ensure high purity of pseudoboehmite produced during mud water carbonisation, the carbonisation process is carried out in two stages. Completion of the first carbonisation stage should be provided at slurry pH of 11-10.5. Under these conditions, amorphous-structured aluminium hydroxide is precipitated from solution. Due to sorption properties, precipitated aluminium hydroxide concentrates impurities contained in mud water. So, intermediate filtration of amorphous aluminium hydroxide produced after the first carbonisation stage allows purifying carbonate liquor to remove major impurities and getting a product with low impurity contents after the second stage.

Intermediate filtration of residue at slurry pH > 11 allows removing only a part of major impurities contained in mud water. Filtration of residue at slurry pH < 10.5 promotes reduction of the target product yield.

Amorphous aluminium hydroxide got after the first carbonisation stage can be used as an active additive to mortars to accelerate strength development of concretes and mortars.

Completion of the second carbonisation stage at slurry pH > 9 promotes incomplete precipitation of Al₂O₃ from product solution. Completion of carbonisation at slurry pH < 8 does not affect Al₂O₃ precipitation rate, but this significantly extends the process duration, results in higher expenses for production, and promotes formation of impurity phases of gibbsite and bayerite.

Temperature of wash water during washing of residue after the second carbonisation stage lower than 40°C is insufficient for removal of soluble impurities and complete conversion of residue to pseudoboehmite, while washing at temperature of wash water higher than 90°C requires installation of special equipment for pressurised operation. Phase composition of residues after the first and second carbonisation stages is subject to mandatory monitoring. Residues are dried, ground, and examined with the X-ray diffraction analysis method using an X-ray diffraction meter, for example, PANanalitical X Pert PRO.

The process speed depends on gas flow rate and CO₂ content in it: higher CO₂ content -> higher process speed. Before carbonisation, exhaust gases should be cooled (to temperature about 40-50°C) and treated by air to reduce capability of sinter dust or other undesirable mechanical impurities getting to the products.

Initial pH of mud water selected as the raw material source is within 12 ±0.2, which is associated with presence of free caustic (Na₂O_{caustic}). Contents of Al₂O₃, Na₂O_{carbonate}, Na₂O_{caustic} in mud water are important for the process. Higher content of Al₂O₃ promotes increase of the target product yield. Duration of the process depends on Na₂O_{caustic} content in initial solution: higher Na₂O_{caustic} content -> more CO₂ required for crossing of the buffer zone and binding of Na₂O_{caustic} in Na₂CO₃ and NaHCO₃.

Higher Na₂O_{carbonate} (Na₂CO₃) content in initial solution results in formation of sodium hydrocarboaluminate (Na₂O·Al₂O₃·2CO₂ 2H₂O) impurity phase in the carbonisation residues and thereby increases Na₂O content in the carbonisation products.

Where above: Na₂Oₜₒₜₐₗ - sum of all Na compounds in solution (total contents of NaOH, Na₂CO₃, NaHCO₃) in Na₂O equivalent; Na₂O_{caustic} - NaOH (caustic) content in Na₂O equivalent; and Na₂O_{carbonate} - Na₂CO₃ content in Na₂O equivalent.

The drawings show the following:

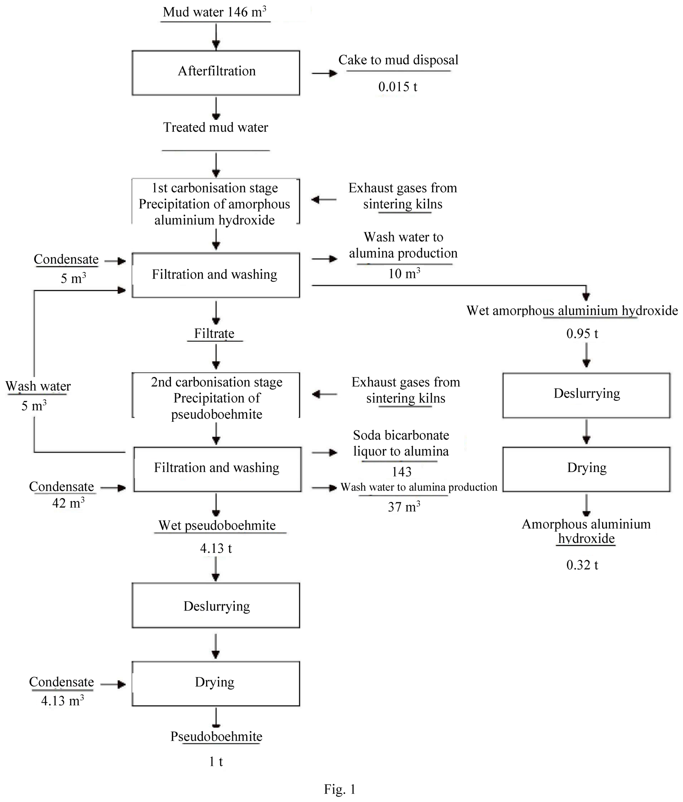

Fig. 1 - an example of a process flow chart for processing of mud water from alumina production.
Fig. 2 - an example of a process and instrumentation diagram for processing of mud water from alumina production.

Mud water is routed from the mud disposal field to the afterfiltration (AF) stage for removal of residual mud content. Mud is routed from the filters to the Mud Removal Unit of the Alumina Production Area, while treated mud water is fed to the mud water receiving agitator (A1).

Mud water is pumped from the agitator (A1) to the carboniser (CB1) at the first carbonisation stage. Exhaust gases precooled to temperature of 40-50°C in the heat exchanger (HE1) and treated in the bag filter (BF1) are also fed to the carboniser (CB1) using the blower (B1). Condensate from cooling of exhaust gases in the condensate trap (CT1) is routed to the Alumina Production Area.

The first carbonisation stage is carried out up to a pH value of slurry preferably equal to 11-10.5. At that, amorphous aluminium hydroxide is precipitated from mud water. Slurry after the first carbonisation stage is routed through the slurry receiving agitator (A2) to filtration in the press filter (PF1). Filtrate is routed to the collecting agitator (A3).

Residue produced in the press filter (PF1) is washed by wash water from the Pseudoboehmite Filtration & Washing Unit and then washed by condensate from the Alumina Production Area. When residue from the press filter (PF1) is used as the commodity product, it is routed to the reslurry tank (RT1), where its reslurrying is performed using condensate from the Alumina Production Area. Resulting slurry is routed to the spray dryer (SD1), where amorphous aluminium hydroxide is dried in air flow preheated by the air heater (AH1) and fed from the blower (B2). Air after the spray dryer (SD1) is passed through two-stage treatment in the cyclone (C1) and bag filter (BF2) for further emission to the atmosphere.

Produced amorphous aluminium hydroxide powder is fed by the screw (S1) to the Finished Products Packaging Unit.

In case of rejects at the first carbonisation stage, residue is mixed with wash water in the agitator (A5) and routed to the Mixture Preparation Unit of the Alumina Production Area.

Filtrate after the first carbonisation stage is routed from the agitator (A3) for the second carbonisation stage to the carbonisers (CB2 - CB5). Carbonisation is carried out using pretreated and cooled exhaust gases up to a pH value of slurry preferably equal to 9-8. Upon achievement of the set pH value, slurry is routed to the collecting agitator (A4) and then for filtration to the press filter (PF2). In order to avoid residue loss with filtrate, the first part of filtrate is routed to the agitator (A4) for refiltration through the residue layer in the press filter (PF2).

Filtered residue is washed by condensate from the Alumina Production Area at temperature of 80-90°C.

Upon completion of filtration, filtrate is mixed with some wash water in the filtrate collector (FC) and sent for needs of the Alumina Production Area.

Some wash water from the second filtration stage is routed for washing of amorphous aluminium hydroxide in the press filter (PF1).

Residue from the press filter (PF2) is routed to the reslurry tank (RT2), where its reslurrying is performed using condensate from the Alumina Production Area. Resulting slurry is routed to the spray dryer (SD2), where pseudoboehmite is dried in air flow preheated by the air heater (AH2) and fed from the blower (B3). Air after the spray dryer (SD2) is passed through two-stage treatment in the cyclone (C2) and bag filter (BF3) for further emission to the atmosphere.

Produced pseudoboehmite powder is fed by the screw (S2) to the Finished Products Packaging Unit.

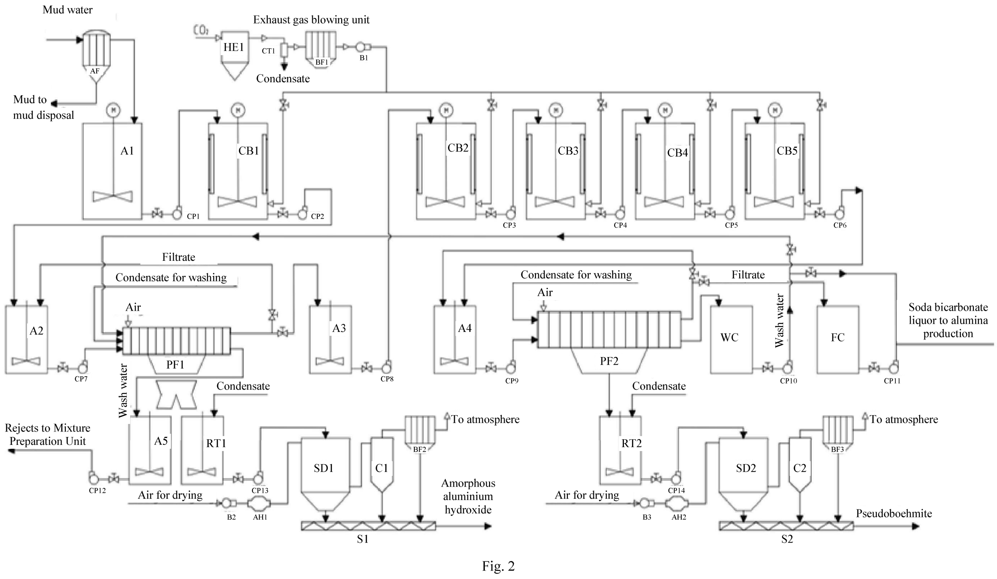

The table below gives a specification example for the process and instrumentation diagram shown in Fig. 2.

| Item | Equipment name | Quantity |
|---|---|---|
| AF | Filter for afterfiltration of mud water | 2 |
| CP1-14 | Centrifugal pump | 36 |
| A1 | Mud water receiving agitator | 1 |
| CB1 | Carboniser of the first stage | 1 |
| CB2-5 | Carboniser of the second stage | 4 |
| HE1 | Heat exchanger for cooling of exhaust gases | 1 |
| CT1 | Condensate trap | 1 |
| BF1 | Bag filter for treatment of exhaust gases | 1 |
| B1 | Blower | 2 |
| A2 | Slurry receiving agitator of the first stage | 2 |
| PF1 | Press filter | 1 |
| A3 | Filtrate agitator after the first carbonisation stage | 1 |
| A4 | Slurry receiving agitator of the second stage | 1 |
| PF2 | Press filter | 1 |
| WC | Wash water collector of the second stage | 1 |
| FC | Filtrate collector of the second stage | 1 |
| A5 | Agitator for removal of rejects | 1 |
| RT1 | Reslurry tank of amorphous aluminium hydroxide | 1 |
| RT2 | Reslurry tank of pseudoboehmite | 1 |
| B2-3 | Blower | 4 |
| AH1-2 | Air heater | 2 |
| SD1-2 | Spray dryer | 2 |
| C1-2 | Cyclone | 2 |
| BF2-3 | Bag filter for treatment of air | 2 |
| S1-2 | Screw for unloading of products | 2 |

### Invention embodiment

### Example 1

Mud water (contents of components: Al₂O₃ = 7.3 g/l, Na₂Oₜₒₜₐₗ = 10.4 g/l, Na₂O_{caustic} = 10.4 g/l) was filtered to solids content of 0.01 g/l.

Filtered mud water 40 l in volume was carbonised by exhaust gases from the sintering kilns with CO₂ content of 5% wt at temperature of 25°C. Carbonisation was carried out up to slurry pH of 8.5. Duration of carbonisation was 2 h. Upon completion of carbonisation, slurry was filtered in the nutsch filter under vacuum of 0.8 kgf/cm². Pure condensate at T = 90°C was applied as wash liquid. Quantity of condensate per washing operation was calculated from the ratio of L:S = 2:1 by weight of wet residue. Total 5 washing operations were performed. Washed residue was dried at temperature of 120°C until moisture loss was stopped.

Phase composition of the product: pseudoboehmite, S_{spec}=278 m²/g.

Parameters of the process are given in Table 2.

### Example 2

Initial mud water was filtered similar to Example 1.

Filtered mud water 40 l in volume was carbonised by exhaust gases from the sintering kilns with CO₂ content of 5% wt.

Carbonisation was carried out in 2 stages. Temperature of mud water at the first carbonisation stage was 25°C. Completion of the first carbonisation stage was recorded at slurry pH of 11. Duration of carbonisation was 15 min. Upon completion of carbonisation, slurry was filtered in the nutsch filter under vacuum of 0.8 kgf/cm². Pure condensate at T = 90°C was applied as wash liquid. Quantity of condensate per washing operation was calculated from the ratio of L:S = 2:1 by weight of wet residue. Total 5 washing operations were performed. Washed residue was dried at temperature of 120°C until moisture loss was stopped, ground, and analysed. Al₂O₃ quantity precipitated to residue at the first carbonisation stage was 25% from initial content in mud water.

Phase composition of residue produced after the first carbonisation stage: amorphous aluminium hydroxide.

Parameters of the first carbonisation stage are given in Table 1.

Carbonate liquor from filtration of amorphous aluminium hydroxide was routed to the second carbonisation stage. Carbonisation was carried out up to slurry pH of 8.5. Duration of carbonisation was 1.5 h. The stages of filtration, washing, drying, and grinding of the product were similar to Example 1.

Phase composition of residue produced after the second carbonisation stage: pseudoboehmite, S_{spec} = 280 m²/g.

Parameters of the second carbonisation stage are given in Table 2.

Contents of impurities in residue produced after the second carbonisation stage are given in Table 3.

### Example 3

The process was similar to Example 2. Completion of the first carbonisation stage was recorded at slurry pH of 11.5. Al₂O₃ quantity precipitated to residue at the first carbonisation stage was 17% from initial content in mud water.

Phase composition of residue produced after the first carbonisation stage: amorphous aluminium hydroxide.

Phase composition of residue produced after the second carbonisation stage: pseudoboehmite with presence of bayerite impurity.

Parameters of the first and second carbonisation stages are given in Tables 1 and 2 respectively.

Contents of impurities in residue produced after the second carbonisation stage are given in Table 3.

### Example 4

The process was similar to Example 2. Completion of the first carbonisation stage was recorded at pH = 10. Al₂O₃ quantity precipitated to residue at the first carbonisation stage was 60% from initial content in mud water.

Phase composition of residue produced after the first carbonisation stage: pseudoboehmite, amorphous aluminium hydroxide, gibbsite, bayerite.

Phase composition of residue produced after the second carbonisation stage: pseudoboehmite.

Parameters of the first and second carbonisation stages are given in Tables 1 and 2 respectively.

Contents of impurities in residue produced after the second carbonisation stage are given in Table 3.

### Example 5

The process was similar to Example 2. Completion of the second carbonisation stage was recorded at slurry pH of 9.5. Al₂O₃ quantity precipitated to residue after the second carbonisation stage was 75% from initial content in mud water.

Phase composition of residue produced after the second carbonisation stage: pseudoboehmite, S_{spec} = 268 m²/g.

Parameters of the first and second carbonisation stages are given in Tables 1 and 2 respectively.

Contents of impurities in residue produced after the second carbonisation stage are given in Table 3.

### Example 6

The process was similar to Example 2. Completion of the second carbonisation stage was recorded at slurry pH of 7. Duration of carbonisation was 6 h.

Phase composition of residue produced after the second carbonisation stage: pseudoboehmite, gibbsite, bayerite.

Parameters of the first and second carbonisation stages are given in Tables 1 and 2 respectively.

Contents of impurities in residue produced after the second carbonisation stage are given in Table 3.

### Example 7

The process was similar to Example 2. Washing was performed by condensate at T = 25°C.

Phase composition of residue produced after the second carbonisation stage: pseudoboehmite, dawsonite.

Parameters of the first and second carbonisation stages are given in Tables 1 and 2 respectively.

Contents of impurities in residue produced after the second carbonisation stage are given in Table 3.

During the studies and tests, the authors established that processing of mud water via single-stage carbonisation (Example 1) allowed production of pseudoboehmite-structured residue with higher impurity contents.

In Example 2, the authors showed achievement of the technical result through inclusion of the additional carbonisation stage to the process of mud water processing with separation of amorphous aluminium hydroxide at slurry pH of 11. The process of mud water processing with the specified parameters allowed production of pseudoboehmite-structured aluminium hydroxide with low contents of impurity elements after the second carbonisation stage.

In Examples 3 and 4, the authors demonstrated effects from slurry pH after the first carbonisation stage on the product properties and yield.

In Example 3, the authors showed that completion of the first carbonisation stage of mud water at slurry pH of 11.5 promoted reduction of Al₂O₃ precipitation in form of amorphous aluminium hydroxide, but it resulted in higher contents of impurity elements in residue produced after the second carbonisation stage and consequent deterioration of the end product quality.

In Example 4, the authors showed that completion of the first carbonisation stage of mud water at slurry pH of 10 promoted significant increase of precipitation after the first carbonisation stage, where residue featured heterogeneous phase composition, which negatively affected its quality and capability for application as additives to dry mortars. In addition, yield of residue after the second carbonisation stage representing pseudoboehmite decreases to 40% from initial content of Al₂O₃ in mud water, which is economically unfeasible.

In Examples 5 and 6, the authors demonstrated effects from slurry pH after the second carbonisation stage on the end product properties and yield.

In Example 5, the authors showed that completion of the second carbonisation stage of mud water at slurry pH of 9.5 did not affect contents of impurities, but promoted reduction of the end product yield by 15%.

In Example 6, the authors established that completion of the second carbonisation stage of mud water at slurry pH of 7 promoted significant increase of the process duration from 2 to 6 hours and formation of impurity phases of gibbsite and bayerite in the end product, which negatively affected its quality.

In Example 7, the authors showed that change of wash water (condensate) temperature to 20°C resulted in increase of Na₂O content in residue after the second carbonisation stage, which deteriorated the product quality and made it unsuitable for application as a precursor for most catalysts.

Increase of wash water temperature higher than 90°C was unfeasible due to high energy consumption for preheating and presence of steam generation.

Taking into account the given description and examples, the scope of legal protection of the offered invention is solicited for the method for processing of mud water from alumina production, which includes: filtration of mud water, its carbonisation via saturation with carbon dioxide, separation of formed residues, their washing by water, and drying, where mud water is carbonised in two stages. The first carbonisation stage is carried out up to a pH value of slurry providing precipitation of amorphous aluminium hydroxide, resulting slurry is filtered to get residue, and this residue is washed to get a product in form of amorphous aluminium hydroxide suitable for application as a modifier of cement mortars and carbonate liquor sent to the second carbonisation stage. The second carbonisation stage is carried out up to a pH value of slurry providing the maximum precipitation quantity of the target residue, resulting slurry is filtered, and residue is washed to get a product in form of pseudoboehmite suitable for application as a precursor in production of aluminium oxide catalyst carriers. Carbonisation of mud water is preferably carried out via bubbling by carbon dioxide-containing gases, where exhaust gases from sintering kilns of aluminium-containing raw materials with limestone and/or soda are used as carbon dioxide-containing gases, and/or gases from lime calcination kilns are used as carbon dioxide-containing gases, and/or gases formed upon combustion of power generating coal or hydrocarbons are used as carbon dioxide-containing gases. The first carbonisation stage is carried out up to a pH value of slurry preferably equal to 11-10.5. Resulting slurry after the first carbonisation stage of mud water is filtered until residue in the filter is dried to preferable moisture content of 60-80% wt. The second carbonisation stage is carried out up to a pH value of slurry preferably equal to 9-8. After the second carbonisation stage, residue is washed at wash water temperature preferably equal to 40-90°C.

Pseudoboehmite-structured aluminium hydroxide produced with the offered method contains at least 90% wt of pseudoboehmite, as well as it features high specific surface area and low contents of impurities.

**Table 1**

| 1st carbonisation stage | | | | | | | |
|---|---|---|---|---|---|---|---|
| | Example 1 | Example 2 | Example 3 | Example 4 | Example 5 | Example 6 | Example 7 |
| Carbonisation temperature, °C | None | 25 | 25 | 25 | 25 | 25 | 25 |
| Final pH | | 11 | 11.5 | 10 | 11 | 11 | 11 |
| Duration, h | | 0.25 | 0.2 | 0.5 | 0.25 | 0.25 | 0.25 |
| % Al₂O₃ precipitated to residue from initial content in mud water | | 25 | 17 | 60 | 25 | 25 | 25 |
| Phase composition of residue, % wt: | | | | | | | |
| Pseudoboehmite | None | - | - | 50 | - | - | - |
| Amorphous aluminium hydroxide | | 100 | 100 | 30 | 100 | 100 | 100 |
| Gibbsite | | - | - | 10 | - | - | - |
| Bayerite | | - | - | 10 | - | - | - |

**Table 2**

| 2nd carbonisation stage | | | | | | | |
|---|---|---|---|---|---|---|---|
| | Example 1 | Example 2 | Example 3 | Example 4 | Example 5 | Example 6 | Example 7 |
| Carbonisation temperature, °C | 25 | 25 | 25 | 25 | 25 | 25 | 25 |
| Temperature of condensate for washing, °C | 90 | 90 | 90 | 90 | 90 | 90 | 20 |
| Final pH | 8.5 | 8.5 | 8.5 | 8.5 | 9.5 | 7 | 8.5 |
| Duration, h | 2 | 1.5 | 1.55 | 1 | 1 | 6 | 1.5 |
| % Al₂O₃ precipitated to residue from carbonate liquor sent to the second carbonisation stage | 100 | 100 | 100 | 100 | 75 | 100 | 100 |

| Phase composition of residue, % wt: | | | | | | | |
|---|---|---|---|---|---|---|---|
| Pseudoboehmite | 100 | 100 | 80 | 100 | 100 | 65 | 80 |
| Gibbsite | - | - | - | - | - | 20 | - |
| Bayerite | - | - | 20 | - | - | 15 | - |
| Dawsonite | - | - | - | - | - | - | 20 |

**Table 3**

| | Example 1 | Example 2 | Example 3 | Example 4 | Example 5 | Example 6 | Example 7 |
|---|---|---|---|---|---|---|---|
| Fe₂O₃ | 0.05 | 0.01 | 0.02 | 0.01 | 0.01 | 0.01 | 0.02 |
| CaO | 0.58 | 0.01 | 0.03 | 0.01 | 0.01 | 0.01 | 0.02 |
| MgO | 0.07 | 0.01 | 0.01 | 0.01 | 0.01 | 0.01 | 0.01 |
| SiO₂ | 0.47 | 0.05 | 0.15 | 0.05 | 0.05 | 0.05 | 0.15 |
| Na₂O | 0.01 | 0.01 | 0.01 | 0.01 | 0.01 | 0.01 | 6 |

## Claims

1. Method for processing of mud water from alumina production, which includes: filtration of mud water, its carbonisation via saturation with carbon dioxide, separation of formed residues, their washing by water, and drying, **characterised in that** mud water is carbonised in two stages, where: the first carbonisation stage is carried out up to a pH value of slurry providing precipitation of amorphous aluminium hydroxide, resulting slurry is filtered to get residue, and this residue is washed to get a product in form of amorphous aluminium hydroxide suitable for application as a modifier of cement mortars and carbonate liquor sent to the second carbonisation stage; the second carbonisation stage is carried out up to a pH value of slurry providing the maximum precipitation quantity of the target residue, resulting slurry is filtered, and residue is washed to get a product in form of pseudoboehmite suitable for application as a precursor in production of aluminium oxide catalyst carriers.

2. The method described in Claim 1 **characterised in that** carbonisation of mud water is carried out via bubbling by carbon dioxide-containing gases, where exhaust gases from sintering kilns of aluminium-containing raw materials with limestone and/or soda are used as carbon dioxide-containing gases, and/or gases from lime calcination kilns are used as carbon dioxide-containing gases, and/or gases formed upon combustion of power generating coal or hydrocarbons are used as carbon dioxide-containing gases.

3. The method described in Claim 1 **characterised in that** the first carbonisation stage is carried out up to a pH value of slurry preferably equal to 11-10.5.

4. The method described in Claim 1 **characterised in that** resulting slurry after the first carbonisation stage of mud water is filtered until residue in the filter is dried to preferable moisture content of 60-80% wt.

5. The method described in Claim 1 **characterised in that** the second carbonisation stage is carried out up to a pH value of slurry preferably equal to 9-8.

6. The method described in Claim 1 **characterised in that** residue after the second carbonisation stage is washed at wash water temperature preferably equal to 40-90°C.
